# FASCICULE DE BREVET EUROPEEN

(11) **EP 2 604 157 B1**
(45) Date de publication et mention de la délivrance du brevet: **02.07.2014**
(21) Numéro de dépôt: 12195853.2
(22) Date de dépôt: 06.12.2012
(51) Int. Cl.: A47J 37/06

(54) **Appareil de cuisson verrouillable**
Verriegelbares Kochgerät
Lockable cooking appliance

(30) Priorité: 16.12.2011 FR 1161838
(43) Date de publication de la demande: 19.06.2013
(73) Titulaire: SEB SA, 69130 Ecully (FR)
(72) Inventeur: Robin, Jean-Philippe, 74570 Groisy (FR)
(74) Mandataire: Novagraaf Technologies

(56) Documents cités:
- US-A1- 2010 199 858

## Description

Est ici concerné un appareil de cuisson d'aliment. Plus particulièrement, la présente invention a trait au domaine des appareils pour réaliser un aliment cuit à base d'une pâte se gonflant sous la chaleur. Ainsi, cet appareil de cuisson peut définir un gaufrier, et plus spécifiquement un gaufrier rotatif.

Dans le domaine, on connaît déjà un appareil pour réaliser un aliment cuit à base d'une pâte, l'appareil comprenant un bâti pour poser l'appareil sur un support, et une structure mobile présentant une chambre de cuisson, la structure étant montée pivotante sur le bâti sur 180° ou plus.

Un tel appareil est décrit dans US20100199858, dans lequel un dispositif pour limiter la rotation est mis en place qui agit comme guide et butée.

Lorsque la structure mobile est en position verticale et sans la plaque de récupération de pâte, sa situation est instable. Une faible action mécanique s'exerçant sur elle peut la déséquilibrer. La structure mobile bascule alors vers sa position stable, horizontale. En état de rangement, la plaque de récupération vient s'insérer dans le bâti fixe et maintient fixe la structure mobile, étant fixe elle-même.

Un basculement intempestif possible de la structure mobile par rapport au bâti fixe est peu pratique, voire gênant.

Lors du transport de l'appareil sans sa plaque de récupération de pâte, la structure mobile est sensible à l'accélération de la personne qui transporte, ce qui peu aussi engendrer un basculement intempestif.

Maintenir la structure mobile en position verticale oblige l'utilisateur à disposer la plaque de récupération de pâte sur le support prévu à cet effet.

Dans ce contexte, le problème ici posé est de réaliser un appareil de cuisson du type précité qui soit de construction simple et qui permette un verrouillage simplifié et plus fiable de la structure mobile par rapport au bâti fixe, ceci de manière simple et rapide.

La solution proposée par la présente invention est que, dans un état de rangement où la chambre de cuisson est sensiblement verticale, la structure mobile est bloquée en rotation par rapport au bâti de façon verrouillable, par un verrou.

Une fois la structure mobile en état de rangement, elle est donc immobilisée quelles que soient les actions mécaniques s'exerçant sur elle ou le bâti, sauf à libérer le verrouillage. La sécurité est performante, y compris lors d'un transport. Appareil stocké, rangé, les objets adjacents sont préservés d'un basculement inopiné. Il y a en outre un gain d'encombrement. Le maintien vertical de la structure mobile ne nécessite pas de prévoir ni d'utiliser de plaque de récupération de pâte amovible.

De préférence ce verrou comprend une partie mobile qui s'engage dans une cavité. La partie mobile comprendra favorablement un loquet.

Dans un mode de réalisation, le verrou est manoeuvrable par un organe de commande accessible à un utilisateur et disposé sur une poignée.

Cela peut permettre de conserver les lignes générales des structures mobiles et bâtis traditionnels antérieurs, et donc concomitamment de faire des économies de conception et de fabrication.

Dans un autre mode particulier de réalisation, la poignée comprend un corps de préhension à l'intérieur duquel l'organe de commande est monté mobile.

Ainsi, certains éléments essentiels au blocage de la structure mobile pourront être discrètement intégrés dans la corps de préhension de la poignée, ce qui épure les lignes générales de l'appareil.

Dans un autre mode particulier de réalisation, la poignée s'étend parallèlement à un axe de pivotement de la structure par rapport au bâti, et l'organe de commande est mobile suivant l'axe de la poignée.

Ceci permet d'optimiser l'encombrement. L'espace disponible dans la poignée peut être utilisé pour y intégrer l'organe de commande. On peut verrouiller en un seul geste la structure mobile.

Dans un autre mode particulier de réalisation, le verrou comprend :
- un mécanisme de verrouillage mobile porté par la structure mobile et comprenant un loquet, et,
- une cavité sur le bâti pour recevoir le loquet.

La solution de verrouillage sera alors à la fois fiable, économique et peu encombrante.

Dans une autre réalisation, le verrou pourra comprendre un loquet manoeuvrable par l'organe de commande formant bouton poussoir accessible à un utilisateur, qui :
- en appuyant une fois dessus, provoquera un engagement du loquet dans une cavité et le verrouillage relatif entre la structure mobile et le bâti, et,
- en appuyant une nouvelle fois dessus, provoquera un désengagement dudit loquet hors de la cavité et donc le déverrouillage.

Ceci est un principe de mécanisme éprouvé et simple d'utilisation pour un appareil destiné à un large panel d'utilisateurs.

Selon une autre caractéristique jugée performante, le bâti présentera une base suivant un plan pour poser l'appareil, ladite base présentant une première dimension (11); la structure mobile, en état de rangement, sera limitée latéralement par deux plans dressés, et présentera, parallèlement à ladite première dimension, une seconde dimension (12) telle que : -5 cm < 12-11 < 5 cm ; lesdites première et seconde dimensions s'étendant perpendiculairement audit axe de pivotement de la structure mobile sur le bâti fixe.

Ceci peut permettre de réduire l'encombrement de l'appareil rangé. Plus précisément, lorsque la différence de longueur entre les première et seconde dimension est élevé, de l'espace de rangement peut être perdu. Ici, l'encombrement sera optimisé.

Dans un autre mode particulier de réalisation, le verrou est manoeuvrable par un organe de commande accessible à un utilisateur et disposé sur le bâti fixe.

Dans un autre mode particulier de réalisation, le verrou comprend :
- un mécanisme de verrouillage mobile porté par le bâti fixe et comprenant un loquet, et
- une cavité sur la structure mobile pour recevoir le loquet.

Dans un autre mode particulier de réalisation, poignée comprend :
- un premier organe entraîné par ledit organe de commande en translation par rapport au corps de préhension ;
- un second organe, guidé en translation par rapport à une première portion du corps, et laissé libre en rotation par rapport à une seconde portion du corps, de sorte que le premier organe est apte à entraîner en rotation le second organe suivant l'axe, dans la seconde portion du corps,
- le loquet est monté coulissant en rotation par rapport au second organe, et,
- le corps de préhension entourant les premier et second organes de manoeuvre, ledit corps comprenant des moyens pour retenir axialement le second organe, en état de rangement, et le laisser libre par rapport au corps, en état d'utilisation.

Dans un mode de réalisation, l'appareil comprend une plaque de récupération d'aliments tombés de la structure mobile, adaptée pour être disposée :
- sous la structure, dans un état d'utilisation, et,
- le long d'elle, dans un état de rangement où ladite plaque est située à distance du verrou.

Dans un autre mode de réalisation :
- en état d'utilisation, le bâti (10), à l'endroit de la base (11) comprend une plaque (13) de récupération ; ladite plaque (13) étant séparable du bâti ;
- en état de rangement, ladite plaque (13) s'étendant le long d'un desdits plans dressés (P3,P3') définit un plan (P4); une troisième dimension (13) étant défini entre l'un des plans dressés (P3,P3') libre et ledit plan (P4) telle que : -5 cm < 13-11 < 5 cm.

En état de rangement, un tel agencement permet de réduire l'encombrement d'un appareil comprenant en outre une plaque de récupération. Dans un tel agencement, le verrouillage de la structure mobile par rapport au bâti et le rangement de la plaque de récupération de pâte sur l'appareil sont complètement indépendants. A titre d'exemple, on peut verrouiller la structure mobile par rapport à la partie mobile de sorte à ranger l'appareil dans un rangement prévu à cet effet, comme par exemple un placard, alors que la plaque de récupération est séparée de l'appareil afin d'être nettoyée.

Toutes les caractéristiques qui précèdent peuvent se combiner en tout ou partie.

D'autres caractéristiques et avantages ressortiront encore de la description qui est faite ci-après, à titre indicatif et nullement limitatif, en référence aux dessins annexés, dans lesquels :
- la figure 1 montre une vue en perspective de l'appareil, dans un état d'utilisation ;
- la figure 2 montre une vue de profil de l'appareil, dans un état de rangement ;
- la figure 3 montre la liaison entre un pivot de la structure mobile et un palier du bâti fixe ;
- la figure 4a montre un mode de réalisation de l'invention dans lequel la poignée intègre le mécanisme de verrouillage, ledit mécanisme étant dans une position déverrouillée ;
- la figure 4b est une vue similaire à la vue 4a, montrant le mécanisme de verrouillage dans une position verrouillée ;
- la figure 5 illustre une vue éclatée avec un mécanisme de verrouillage analogue à celui représenté sur les figures 3 et 4 ;
- les figures 6a à 6d montrent différents modes de réalisation du mécanisme de verrouillage.

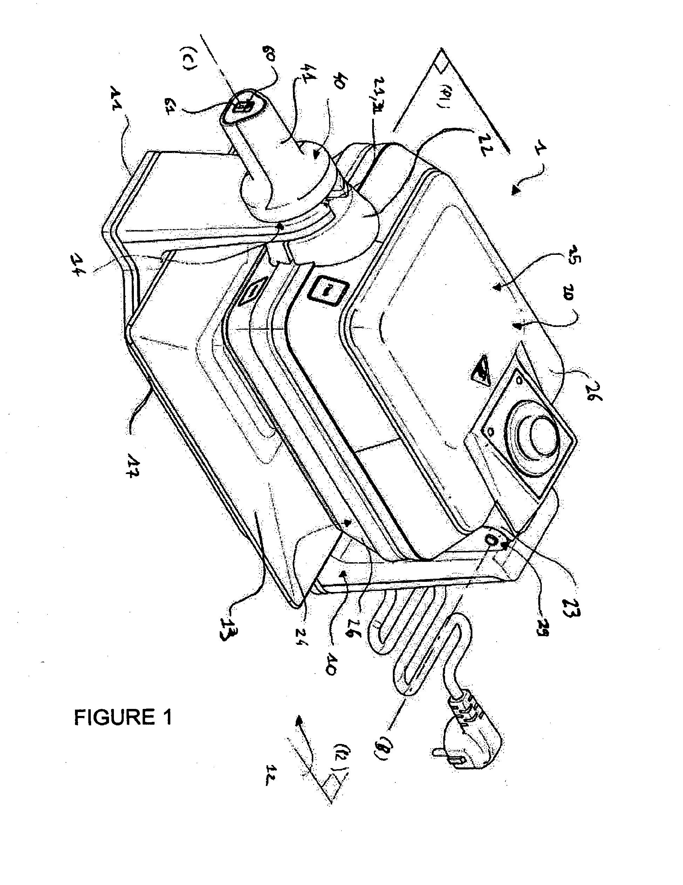

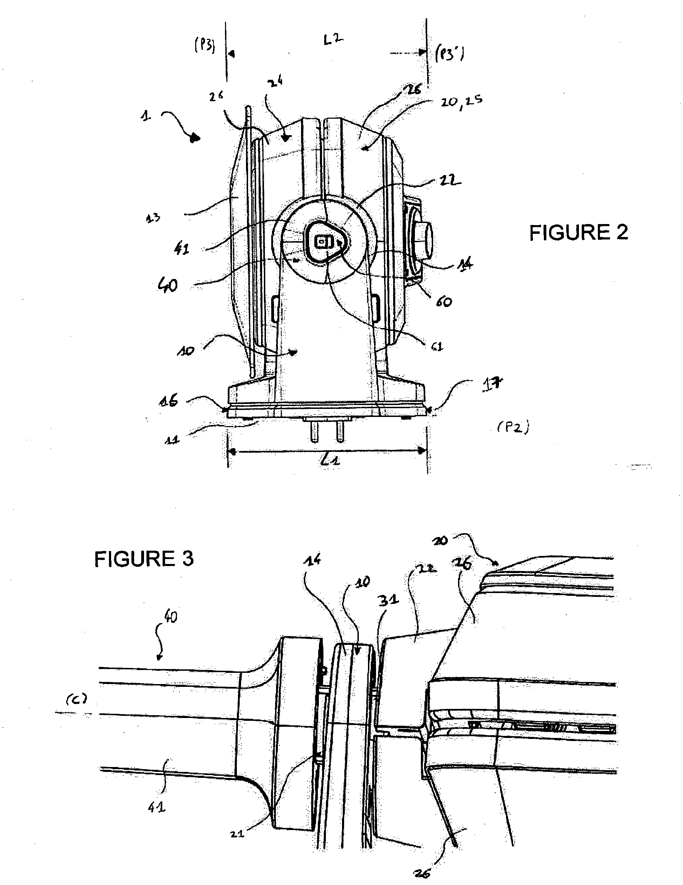

Figures 1 et 2, l'appareil 1 de cuisson d'un aliment à base d'une pâte se gonflant sous la chaleur, en l'espèce un gaufrier, comporte un bâti 10 fixe et une structure 20 mobile.

Le bâti 10 fixe présente une base 11 pour poser l'appareil 1 sur un support 12, tel une table ou un plan de travail.

La structure 20 mobile est montée pivotante sur le bâti 10 fixe, par l'intermédiaire d'un arbre 21 présentant un axe (A) horizontal quand la base 11 est posée sur un support 12 horizontal.

Préférentiellement, la structure 20 est montée pivotante sur le bâti 10 sur 180° ou plus. A titre d'exemple, cette course angulaire de la structure 20 peut être stoppée par une butée par exemple formée par deux éléments saillants, l'un sur la structure 20, l'autre sur la partie fixe 10.

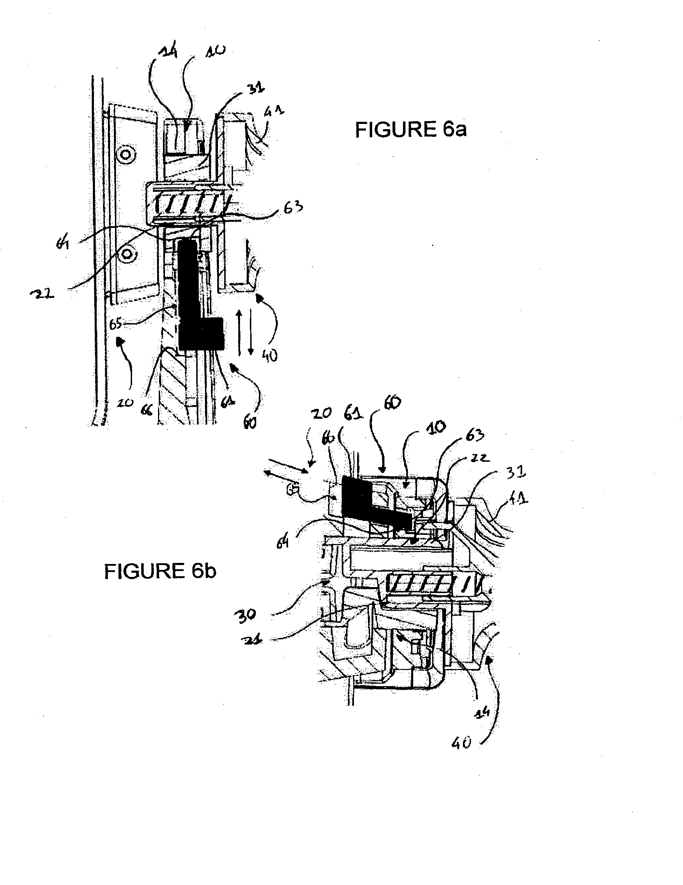

Préférentiellement, comme montré figures 1 et 6a à 6d, la structure mobile 20 est montée ainsi pivotante à deux extrémités 22,23 opposées : une première 22 et seconde 23 extrémités.

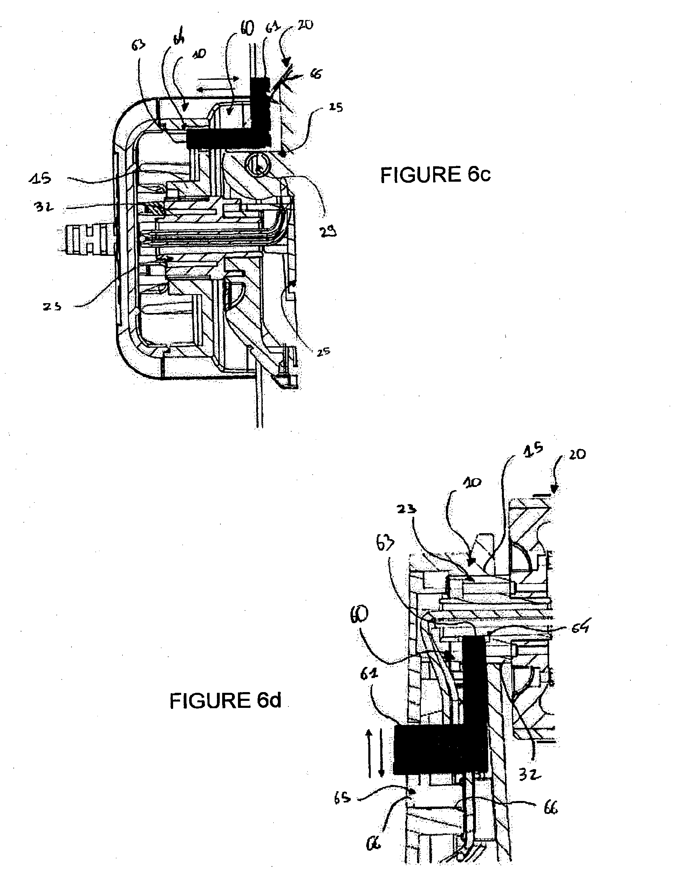

La structure mobile 20 peut comprendre une première partie 24 fixe par rapport à l'arbre et une seconde partie 25 mobile par rapport à la première partie 24. Ces deux parties 24,25 sont articulées entre elles par une charnière 29 (voir figure 6c) entre une position rapprochée et une position écartée.

En position rapprochée, les première 24 et seconde 25 parties se rejoignent et forment une chambre 30 de cuisson alors fermée (figure 6b), laquelle présente un plan (P1) parallèle à l'axe (A) de l'arbre. Ce peut éventuellement être un plan médian (P1).

En position écartée, les première 24 et seconde 25 parties sont éloignées de sorte à permettre un accès à la chambre 30 de cuisson alors ouverte.

L'appareil 1 comprend en outre une poignée 40 pour faire pivoter la structure 20. Lorsque la base 11 du bâti 10 fixe est posée sur le support 12 horizontal, la structure 20 mobile reliée à la poignée 40 présente deux états :
- un état d'utilisation de la chambre 30 où le plan (P1) est sensiblement horizontal (figure 1), et,
- un état de rangement où le plan (P1) est sensiblement vertical (figure 2).

En état de rangement, la chambre 30 de cuisson est sensiblement verticale.

La structure mobile 20 est montée pivotante sur le bâti 10 autour de l'axe (A) de pivotement entre au moins une première position angulaire de manoeuvre (correspondant à l'état d'utilisation) dans laquelle la seconde partie 25 mobile est au-dessus de la première partie 24 fixe et une seconde position angulaire de manoeuvre (correspondant à l'état de rangement) dans laquelle la seconde partie 25 mobile et la première partie fixe 24 sont côte à côte, latéralement attenantes.

La première partie 24 fixe et la seconde partie 25 mobile comprennent de préférence chacune une coquille 26 qui forme le corps de la partie correspondante, une plaque de cuisson qui est portée par la coquille 26 correspondante et qui est adaptée à recevoir contre elle la nourriture à cuire, et, derrière, une résistance électrique destinée à chauffer la plaque de cuisson. Chaque plaque de cuisson peur être reliée de façon amovible à la coquille 26 correspondante par un mécanisme d'encliquetage. La cuisson de l'aliment est par conduction. Les plaques de cuisson sont a priori pleines.

Figure 3, l'appareil 1 comprend une unique poignée 40 située au bout de l'arbre 21 relié à la seconde partie 25 mobile et qui s'étend à une seulement desdites extrémités 22, 23, préférentiellement à l'opposé de la charnière 29.

Un dispositif de verrouillage libérable peut autoriser ou empêcher la libre articulation entre elles des première 24 et seconde 25 parties.

L'appareil comprend de préférence une plaque 13 de récupération d'aliment en excès et/ou tombé de la chambre de cuisson.

Figure 1, le bâti 10, à l'endroit de la base 11, comprend ladite plaque 13 qui s'étend sous la structure 20 mobile et qui est adaptée à recevoir la pâte tombant de ladite structure. De préférence, cette plaque de récupération est séparable du bâti.

De préférence, en état de rangement, la plaque 13 s'étendant le long d'un desdits plans dressés (P3,P3') définit un plan (P4). Une troisième dimension (13) étant défini entre l'un des plans dressés (P3,P3') libre et ledit plan (P4) telle que : -5 cm < 13-11 < 5 cm.

Le bâti 10 comprend également préférentiellement deux paliers 14, 15 : un premier palier 14 adjacent à la première extrémité 22 et un second palier 15 adjacent à la seconde extrémité 23. Les deux paliers 14,15, sont alignés selon l'axe (A) et servent de support à la structure 20. Les deux paliers 14,15, sont de préférence situés suffisamment au dessus de la plaque 13 de récupération pour que le gaufrier 20 puisse ainsi pivoter librement autour de l'axe.

Dans un mode de réalisation, la plaque 13 est réalisée en un matériau magnétisable de sorte à pouvoir se solidariser avec la première partie 24 fixe comprenant un aimant à l'endroit de sa face tournée vers l'extérieur de l'appareil 1.

Figure 3, la structure mobile 20 comprend un premier pivot 31 monté libre en rotation dans le premier palier 14, et un second pivot 32 monté libre en rotation dans le second palier 15. Ainsi, les deux pivots 31,32, s'étendent le long de l'axe (A) et forment l'arbre 21 autour duquel pivote la structure mobile 20.

Le second pivot 32 peut être un cylindre emprisonné dans le second palier 15. Préférentiellement, le premier pivot 31 est solidaire de la seconde partie 25 mobile.

L'appareil 1 comprend en outre un verrou 60, comme illustré figures 1,4a,4b et 5. Ainsi, dans son état de rangement, la structure mobile 20 sera bloquée en rotation de façon verrouillable par rapport au bâti 10, par le verrou 60 (état figure 2). On recommande que ce verrou comprenne une partie mobile qui s'engage dans une cavité (telle 64 ci-après) et se dégage d'elle, suivant que l'on verrouille ou déverrouille. L'une de ces partie mobile et cavité est de préférence portée par la structure mobile 20. La partie mobile peut en particulier comprendre un loquet 63 (voir exemple ci-après).

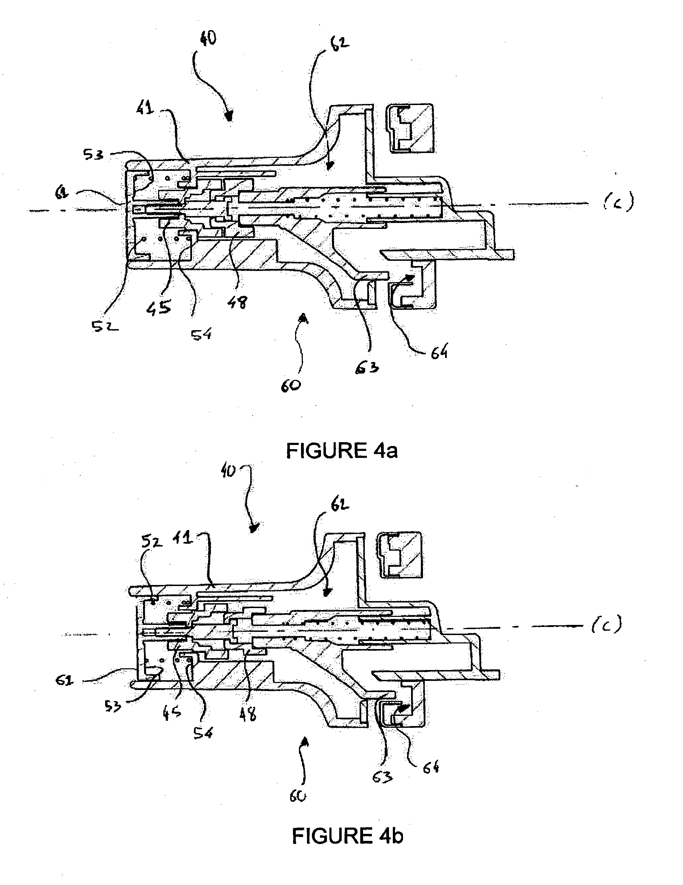

Figures 4a et 4b, le verrou 60 est manoeuvrable par un organe 61 de commande accessible à un utilisateur et disposé sur la poignée 40. Dans un autre mode de réalisation, la poignée 40 s'étend suivant un axe (C) parallèle à l'axe (A), et, l'organe 61 de commande se meut suivant l'axe (C) de la poignée 40.

Dans un mode de réalisation, la poignée 40 comprend un corps de préhension 41 à l'intérieur duquel l'organe 61 de commande est monté mobile, entre :
- une position de déverrouillage de la structure mobile 20 correspondant préférentiellement à l'état d'utilisation, et,
- une position de verrouillage correspondant préférentiellement à l'état de rangement de l'appareil 1 (plan (P1) sensiblement vertical).

Figures 4a, 4b, 5, 6b et 6c, le verrou 60 comprend un mécanisme de verrouillage mobile porté par la structure mobile 20 et comprenant un loquet 63 et une cavité 64 sur le bâti 10 pour recevoir ce loquet.

Le verrou 60 peut comprendre un loquet 63 manoeuvrable par l'organe 61 de commande. Comme représenté sur les figures 4a et 4b, cet organe 61 de commande peut consister en un bouton poussoir. L'organe 61 de commande peut également être constitué d'un curseur en translation ou tout autre moyen mobile apte à définir un verrouillage entre la structure 20 mobile et le bâti 10. Cet organe 61 de commande, accessible à l'utilisateur, présente préférentiellement deux positions : une première position dans laquelle, en appuyant une fois sur l'organe 61 de commande, ledit organe 61 provoque un engagement du loquet 63 dans la cavité 61 et le verrouillage relatif entre la structure 20 mobile et le bâti 10, et une seconde position dans laquelle, en appuyant une nouvelle fois dessus, l'organe 61 de commande provoque un désengagement dudit loquet 63 hors de la cavité 64 et donc le déverrouillage relatif entre la structure 20 mobile et le bâti 10.

Figures 6a et 6d, le verrou 60 est manoeuvrable par l'organe 61 de commande accessible par l'utilisateur et est disposé sur le bâti 10 fixe.

Figures 6a et 6d, le mécanisme 62 de verrouillage mobile est porté par le bâti 10 fixe et comprend le loquet 63, et la cavité 64 est située sur la structure 20 mobile afin de recevoir le loquet 63.

A priori l'appareil 1 présentera plusieurs dimensions remarquables. Figure 2, on voit que la base 11 du bâti 10 présente une première dimension (11) définissant la largeur, dimension plus courte que la longueur, laquelle s'étendra de préférence suivant l'axe (A) de rotation de la structure mobile 20, ladite largeur s'étendant alors perpendiculairement à cet axe (A).

De préférence sera considérée comme première dimension (11) la distance maximale séparant un premier bord 16 d'un second bord 17 lorsqu'elle est mesurée perpendiculairement à l'axe (A) de rotation de la structure 20 mobile.

En outre, la structure 20 mobile présente une longueur, une épaisseur (e) et une seconde dimension (12) définissant une largeur. En état de rangement, la largeur et la longueur s'étendent sensiblement parallèlement à un plan P2 de pose défini par le support 12, et l'épaisseur (e) s'étend sensiblement orthogonalement à ce même plan (P2). En état d'utilisation, l'épaisseur (e) et la longueur s'étendent sensiblement parallèlement au plan P2 de pose, tandis que la seconde dimension (12) s'étend sensiblement orthogonalement à ce même plan P2.

Selon un mode de réalisation, l'appareil 1 pour réaliser un aliment cuit à base d'une pâte se gonflant sous la chaleur. L'appareil 1 comprend le bâti 10 fixe présentant la base 11 suivant un plan (P2) pour poser l'appareil 1 sur le support 12 horizontal, et la structure 20 mobile présentant la chambre 30 de cuisson ouvrable et pouvant être fermée suivant le plan (P1), la structure 20 étant montée pivotante sur le bâti 10 sur 180° ou plus, par l'intermédiaire de la poignée 40 et autour de l'axe (A), entre un état d'utilisation où le plan (P1) est sensiblement horizontal, et un état de rangement où le plan (P1) est sensiblement vertical. Dans son état de rangement, la structure (20) mobile est bloquée en rotation par rapport au bâti (10) de façon verrouillable, par le verrou (60).

La structure 20 mobile, en état de rangement, est limitée latéralement par deux plans (P3,P3') dressés.

Préférentiellement, les première (11) et seconde (12) dimensions seront telles que ; -5 cm < 12-11 < 5 cm.

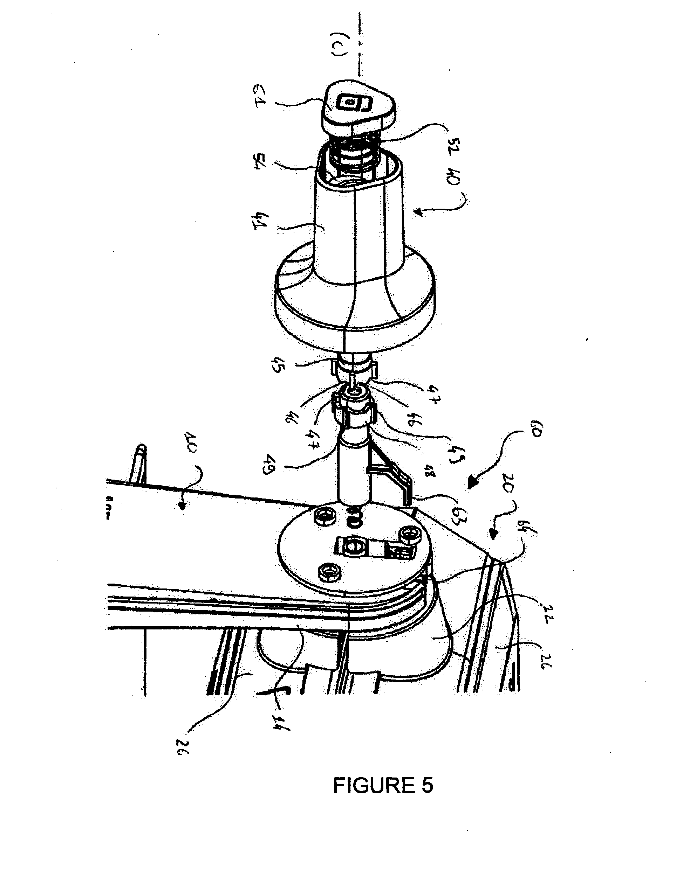

Figures 4a, 4b et 5, la poignée 40 comprend :
- un premier organe 45 de manoeuvre contrôlé par ledit organe de commande 61 et guidé en translation par rapport au corps 41 de préhension par des premiers moyens de guidage (non représentés);
- un second organe 48 de manoeuvre, guidé en translation par rapport à une première portion (non représentée) du corps 41 par des seconds moyens de guidage (non représentés), et laissé libre en rotation par rapport à une seconde portion (non représentée) du corps, de sorte que le premier organe 45 de manoeuvre est apte à entraîner en rotation le second organe 48 de manoeuvre suivant l'axe (A), sur la seconde portion du corps,
- le loquet 63 monté coulissant en rotation par rapport au second organe 48 de manoeuvre,
- ledit corps de préhension 41 entourant les premier 45 et second 48 organes de manoeuvre, ledit corps 41 comprenant des moyens (non représentés) pour retenir axialement le second organe 48, en état de rangement, et le laisser libre par rapport au corps 41, en état d'utilisation.

Dans un mode de réalisation, ce qui suit est prévu : l'organe de commande 61 pour commander le loquet 63 est rétractable. L'organe de commande 61 est de préférence relié au premier organe 45 de manoeuvre définissant une translation par rapport au corps 41 de préhension. L'organe de commande 61 et le premier organe 45 de manoeuvre sont agencés de sorte que lorsqu'on agit sur l'organe de commande 61, on agit également sur le premier organe 45 de manoeuvre. Figures 4a et 4b, un ressort 52 est monté entre une première butée 53 définie sur l'organe de commande 61 et une seconde butée 54 définie sur le corps de préhension 41. Le premier organe 45 de manoeuvre est guidé en translation par rapport au corps 41 grâce à des premiers moyens de guidage 50 connus de l'homme du métier, du type clavetage.

En outre, le premier organe 45 de manoeuvre est associé au second organe 48 de manoeuvre. Ce second organe 48 de manoeuvre définit également une translation par rapport au corps 41 de préhension, et est guidé en translation par rapport au corps 41 grâce à des seconds moyens de guidage au moins sur une portion du corps 41.

Plus précisément, le second organe 48 de manoeuvre est guidé en translation axialement sur une première portion du corps 41, tandis qu'il est laissé libre en rotation sur une seconde portion du corps 41, de sorte que le second organe 48 de manoeuvre puisse pivoter par rapport au premier organe 45 de manoeuvre.

Figure 5, le premier organe 45 de manoeuvre présente, du côté du second organe 48 de manoeuvre, une forme propre à se craboter avec le second organe 48. Lorsqu'on agit sur l'organe de commande 61, le premier organe 45, présentant des dents 46, vient en contact du second organe 48. En début de course, le premier organe 45 de manoeuvre pousse le second organe 48 de manoeuvre jusqu'à ce qu'il quitte les seconds moyens de guidage. Une fois que le second organe 48 de manoeuvre est dégagé des seconds moyens de guidage, il est libre en rotation et des parties saillantes 49 du second organe 48 de manoeuvre viennent progressivement buter contre des creux 47 définis entre les dents 46, de manière à ce que le premier organe 45 de manoeuvre entraîne en rotation le second organe 48 de manoeuvre.

Le corps de préhension 41 peut comprendre des moyens (non représentés) pour retenir axialement le second organe 48, par exemple des nervures 44 destinés à coopérer avec les parties saillantes 49 du second organe 48.

En outre, en position de verrouillage, les parties saillantes 49 du second organe 48 viennent alors coopérer avec les nervures 44. Cet agencement permet de maintenir la position du second organe 48 de manoeuvre. Le loquet 63 est associé au second organe 48 et est alors en position insérée dans la cavité 64.

Pour déverrouiller, il convient d'appuyer une nouvelle fois sur l'organe de commande 61 de manière à désengager les parties saillantes 49 du second organe 48 des nervures 44, et à ce que le premier organe 45 guide le second organe 48 vers ses moyens de guidage avec le corps de préhension 41. De cette manière, le second organe 48 de manoeuvre, donc le loquet 63, n'est plus maintenu axialement. Il se retire alors vers l'intérieur du corps de préhension 41, du côté du premier organe 45 de manoeuvre.

Le second organe 48 de manoeuvre est monté coulissant en rotation sur le loquet 63. Dans le mode de réalisation représenté sur les figures 4a et 4b, le second organe 48 et le loquet 63 se translatent, solidairement, suivant l'axe (C).

Dans un autre mode particulier de réalisation représenté sur les figures 6a et 6d, le verrou 60 est manoeuvrable par l'organe de commande 61 accessible à un utilisateur et disposé sur le bâti 10 fixe.

Dans un autre mode particulier de réalisation, le verrou 60 comprend le mécanisme 62 de verrouillage mobile porté par le bâti 10 fixe et comprenant le loquet 63, et la cavité 64 sur la structure 20 mobile pour recevoir le loquet.

Figure 6a, l'organe de commande 61 est disposé dans le bâti 10, sous la poignée 40. Cet organe de commande 61 forme également loquet 63 et se translate dans un logement 65 prévu à cet effet, suivant un axe vertical, afin de définir deux positions prédéterminées : une position basse où l'organe de commande 61 vient buter sur la butée 66 du logement 65, et une position haute où l'organe de commande 61 vient s'engager dans la cavité 64 définie dans le premier pivot. En position haute, il n'y a pas de mouvement relatif entre le premier pivot 31 et le premier palier 14.

Figure 6d, l'organe de commande 61 n'est pas situé du côté de la poignée 40, mais côté opposé : celui de la charnière 29. L'organe de commande 61 est alors disposé dans le bâti 10, sous la charnière 29. L'organe de commande 61 se translate dans un logement 65 prévu à cet effet, suivant un axe vertical, afin de définir deux positions prédéterminées : une position basse où l'organe de commande 61 vient buter sur la butée 66 du logement 65, et une position haute où l'organe de commande 61 vient s'engager dans la cavité 64 définie dans le second pivot 32. En position haute, il n'y a pas de mouvement relatif entre le second pivot 32 et le second palier 15.

Figure 6b, l'organe de commande 61 formant également loquet 63 est disposé sur la seconde partie 25 mobile de la structure 20 mobile. Plus précisément, en position de verrouillage, l'organe de commande 61 traverse de part en part le logement 65 guidant en translation l'organe 61 vers la cavité 64 du bâti 10. Ainsi, en position de verrouillage, l'organe de commande 61 vient s'insérer dans la cavité 64 du bâti 10, au-dessus du premier palier 14. La position de la structure 20 est alors verrouillée.

Dans encore un autre mode de réalisation montré sur la figure 6c, l'organe de commande 61 est disposé à proximité immédiate de la charnière 29 sur la seconde partie 25 mobile de la structure 20 mobile. L'organe de commande 61 définit un mouvement de translation suivant un axe horizontal. L'organe de commande 61 coulisse dans un logement 65 prévu à cet effet entre une première position engagée où l'organe de commande 61 est à plus grande proximité du bâti fixe 10 et vient coulisser dans le logement 65 avant de s'engager dans la cavité 64, et, une seconde position rétractée où l'organe de commande est relativement plus éloigné du bâti 10 et de la cavité 64.

## Revendications

1. Appareil (1) pour réaliser un aliment cuit à base d'une pâte, l'appareil (1) comprenant un bâti (10) pour poser l'appareil (1) sur un support (12), et une structure (20) mobile présentant une chambre (30) de cuisson, la structure (20) étant montée pivotante sur le bâti (10) sur 180° ou plus, **caractérisé en ce que**, dans un état de rangement où la chambre (30) de cuisson est sensiblement verticale, la structure (20) mobile est bloquée en rotation par rapport au bâti (10) de façon verrouillable, par un verrou (60).

2. Appareil (1) selon la revendication 1, **caractérisé en ce que** le verrou (60) est manoeuvrable par un organe de commande (61) accessible à un utilisateur et disposé sur une poignée (40).

3. Appareil (1) selon la revendication 2, **caractérisé en ce que** la poignée (40) comprend un corps de préhension (41) à l'intérieur duquel l'organe de commande (61) est monté mobile.

4. Appareil (1) selon la revendication 2 ou 3, **caractérisé en ce que** :
- la poignée (40) s'étend parallèlement à un axe (A) de pivotement de la structure (20) par rapport au bâti (10), et,
- l'organe de commande (61) est mobile suivant un axe (C) de la poignée.

5. Appareil (1) selon l'une des revendications précédentes, **caractérisé en ce que** le verrou (60) comprend :
- un mécanisme de verrouillage (62) mobile porté par la structure (20) mobile et comprenant un loquet (63), et,
- une cavité (64) sur le bâti (10) pour recevoir le loquet (63).

6. Appareil (1) selon la revendication 5, **caractérisé en ce que** le verrou (60) comprend le loquet (63) manoeuvrable par l'organe de commande (61) formant bouton poussoir accessible à un utilisateur, qui :
- en appuyant une fois dessus, provoque un engagement du loquet (63) dans une cavité (64) et le verrouillage relatif entre la structure (20) mobile et le bâti (10), et,
- en appuyant une nouvelle fois dessus, provoque un désengagement dudit loquet (63) hors de la cavité (64) et donc le déverrouillage.

7. Appareil (1) selon l'une quelconque des revendications 4 à 6, **caractérisé en ce que** :
- ledit bâti (10) présente une base (11) suivant un plan (P2) pour poser l'appareil (1), ladite base (11) présentant une première dimension (11) ;
- la structure (20) mobile, en état de rangement, est limitée latéralement par deux plans dressés (P3,P3'), et présente parallèlement à ladite première dimension (11) une seconde dimension (12) telle que : -5 cm < 12-11 < 5 cm ; lesdites première (11) et seconde (12) dimensions s'étendant perpendiculairement audit axe (A).

8. Appareil (1) selon l'une quelconque des revendications 1, 6 ou 7, **caractérisé en ce que** le verrou (60) est manoeuvrable par un organe de commande (61) accessible à un utilisateur et disposé sur le bâti (10) fixe.

9. Appareil (1) selon l'une des revendications 1 ou 6 à 8, **caractérisé en ce que** le verrou (60) comprend :
- un mécanisme de verrouillage (62) mobile porté par le bâti (10) fixe et comprenant un loquet (63), et
- une cavité (64) sur la structure (20) mobile pour recevoir le loquet (63).

10. Appareil (1) de cuisson selon l'une des revendications 3 à 7, **caractérisé en ce que** la poignée (40) comprend :
- un premier organe (45) entraîné par ledit organe de commande (61) en translation par rapport au corps de préhension (41);
- un second organe (48), guidé en translation par rapport à une première portion (42) du corps, et laissé libre en rotation par rapport à une seconde portion (43) du corps, de sorte que le premier organe (45) est apte à entraîner en rotation le second organe (48) suivant l'axe (C), dans la seconde portion (43) du corps,
- le loquet (63) est monté coulissant en rotation par rapport au second organe (48),
- ledit corps de préhension (41) entourant les premier (45) et second (48) organes de manoeuvre, ledit corps (41) comprenant des moyens (44) pour retenir axialement le second organe (48), en état de rangement, et le laisser libre par rapport au corps (41), en état d'utilisation.

11. Appareil (1) selon l'une des revendications précédentes, **caractérisé en ce qu'**il comprend une plaque (13) de récupération d'aliments tombés de la structure (20) mobile, adaptée pour être disposée :
- sous la structure (20), dans un état d'utilisation, et,
- le long d'elle, dans un état de rangement où ladite plaque (13) est située à distance du verrou (60).

## Patentansprüche

1. Gerät (1) zur Herstellung eines gegarten Nahrungsmittels auf der Basis eines Teigs, wobei das Gerät (1) ein Gestell (10), um das Gerät (1) auf eine Unterlage (12) zu stellen, und einen beweglichen Aufbau (20) enthält, der einen Garraum (30) aufweist, wobei der Aufbau (20) um 180° oder mehr schwenkbar auf das Gestell (10) montiert ist, **dadurch gekennzeichnet, dass** in einem Verstauzustand, in dem der Garraum (30) im Wesentlichen senkrecht ist, der bewegliche Aufbau (20) bezüglich des Gestells (10) von einem Riegel (60) in Drehung verriegelbar arretiert wird.

2. Gerät (1) nach Anspruch 1, **dadurch gekennzeichnet, dass** der Riegel (60) von einem Steuerorgan (61) betätigbar ist, das für einen Benutzer zugänglich und auf einem Handgriff (40) angeordnet ist.

3. Gerät (1) nach Anspruch 2, **dadurch gekennzeichnet, dass** der Handgriff (40) einen Greifkörper (41) enthält, in dessen Innerem das Steuerorgan (61) beweglich montiert ist.

4. Gerät (1) nach Anspruch 2 oder 3, **dadurch gekennzeichnet, dass**:
- der Handgriff (40) sich parallel zu einer Schwenkachse (A) des Aufbaus (20) bezüglich des Gestells (10) erstreckt, und
- das Steuerorgan (61) gemäß einer Achse (C) des Handgriffs beweglich ist.

5. Gerät (1) nach einem der vorhergehenden Ansprüche, **dadurch gekennzeichnet, dass** der Riegel (60) enthält:
- einen beweglichen Verriegelungsmechanismus (62), der vom Aufbau (20) getragen wird und eine Klinke (63) enthält, und
- einen Hohlraum (64) auf dem Gestell (10) zur Aufnahme der Klinke (63).

6. Gerät (1) nach Anspruch 5, **dadurch gekennzeichnet, dass** der Riegel (60) die Klinke (63) durch das Steuerorgan (61) betätigbar enthält, das einen für einen Benutzer zugänglichen Drücker bildet, der:
- wenn er einmal gedrückt wird, ein Einrasten der Klinke (63) in einen Hohlraum (64) und die relative Verriegelung zwischen dem beweglichen Aufbau (20) und dem Gestell (10) bewirkt, und
- bei erneutem Drücken ein Lösen der Klinke (63) aus dem Hohlraum (64) und somit die Entriegelung bewirkt.

7. Gerät (1) nach einem der Ansprüche 4 bis 6, **dadurch gekennzeichnet, dass**:
- das Gestell (10) eine Basis (11) gemäß einer Ebene (P2) aufweist, um das Gerät (1) aufzustellen, wobei die Basis (11) eine erste Abmessung (11) aufweist;
- der bewegliche Aufbau (20) im Verstauzustand seitlich von zwei hochstehenden Ebenen (P3, P3') begrenzt wird und parallel zur ersten Abmessung (11) eine zweite Abmessung (12) aufweist, derart, dass gilt: -5 cm < 12-11 < 5 cm; wobei die erste (11) und die zweite (12) Abmessung sich lotrecht zur Achse (A) erstrecken.

8. Gerät (1) nach einem der Ansprüche 1, 6 oder 7, **dadurch gekennzeichnet, dass** der Riegel (60) von einem Steuerorgan (61) betätigbar ist, das für einen Benutzer zugänglich und auf dem ortsfesten Gestell (10) angeordnet ist.

9. Gerät (1) nach einem der Ansprüche 1 oder 6 bis 8, **dadurch gekennzeichnet, dass** der Riegel (60) enthält:
- einen beweglichen Verriegelungsmechanismus (62), der vom ortsfesten Gestell (10) getragen wird und eine Klinke (63) enthält, und
- einen Hohlraum (64) auf dem beweglichen Aufbau (20), um die Klinke (63) aufzunehmen.

10. Gargerät (1) nach einem der Ansprüche 3 bis 7, **dadurch gekennzeichnet, dass** der Handgriff (40) enthält:
- ein erstes Organ (45), das vom Steuerorgan (61) in Translationsrichtung bezüglich des Greifkörpers (41) angetrieben wird;
- ein zweites Organ (48), in Translationsrichtung bezüglich eines ersten Teils (42) des Körpers geführt und bezüglich eines zweiten Teils (43) des Körpers drehfrei gelassen, so dass das erste Organ (45) das zweite Organ (48) gemäß der Achse (C) im zweiten Teil (43) des Körpers in Drehung versetzen kann,
- wobei die Klinke (63) bezüglich des zweiten Organs (48) in Drehung gleitend montiert ist,
- wobei der Greifkörper (41) die ersten (45) und zweiten (48) Betätigungsorgane umgibt, wobei der Körper (41) Einrichtungen (44) für den axialen Halt des zweiten Organs (48) im Verstauzustand und seine Freigabe bezüglich des Körpers (41) im Nutzungszustand enthält.

11. Gerät (1) nach einem der vorhergehenden Ansprüche, **dadurch gekennzeichnet, dass** es eine Platte (13) zum Auffangen von vom beweglichen Aufbau (20) gefallenen Lebensmitteln enthält, die geeignet ist, um angeordnet zu werden:
- unter dem Aufbau (20) in einem Nutzungszustand, und
- entlang von ihm in einem Verstauzustand, in dem die Platte (13) sich in Abstand zum Riegel (60) befindet.

## Claims

1. Apparatus (1) for producing a dome-based cooked foodstuff, the apparatus (1) comprising a frame (10) for placing the apparatus (1) on a support (12), and a movable structure (20) having a cooking chamber (30), the structure (20) being mounted such that it can pivot on the frame (10) over 180° or more, **characterized in that**, in a storage state in which the cooking chamber (30) is substantially vertical, the movable structure (20) is blocked in rotation with respect to the frame (10) in a lockable manner by a lock (60).

2. Apparatus (1) according to Claim 1, **characterized in that** the lock (60) can be operated by a control member (61) accessible to a user and arranged on a handle (40).

3. Apparatus (1) according to Claim 2, **characterized in that** the handle (40) comprises a gripping body (41) inside which the control member (61) is movably mounted.

4. Apparatus (1) according to Claim 2 or 3, **characterized in that**:
- the handle (40) extends parallel to an axis (A) for pivoting the structure (20) with respect to the frame (10), and
- the control member (61) is movable along an axis (C) of the handle.

5. Apparatus (1) according to one of the preceding claims, **characterized in that** the lock (60) comprises:
- a movable locking mechanism (62) borne by the movable structure (20) and comprising a latch (63), and
- a cavity (64) on the frame (10) for receiving the latch (63).

6. Apparatus (1) according to Claim 5, **characterized in that** the lock (60) comprises the latch (63) which can be operated by the control member (61) forming a push-button accessible to a user, which:
- by pressing on it once, causes an engagement of the latch (63) in a cavity (64) and the relative locking between the movable structure (20) and the frame (10), and,
- by pressing on it once again, causes a disengagement of the said latch (63) out of the cavity (64) and therefore unlocking.

7. Apparatus (1) according to any one of Claims 4 to 6, **characterized in that**:
- the said frame (10) has a base (11) in a plane (P2) for placing the apparatus (1), the said base (11) having a first dimension (11);
- the movable structure (20), in the storage state, is limited laterally by two upright planes (P3, P3') and has parallel to the said first dimension (11) a second dimension (12) such that: -5 cm < 12-11 < 5 cm; the said first (11) and second (12) dimensions extending perpendicularly to the said axis (A).

8. Apparatus (1) according to any one of Claims 1, 6 and 7, **characterized in that** the lock (60) can be operated by a control member (61) accessible to a user and arranged on the fixed frame (10).

9. Apparatus (1) according to one of Claims 1 or 6 to 8, **characterized in that** the lock (60) comprises:
- a movable locking mechanism (62) borne by the fixed frame (10) and comprising a latch (63), and
- a cavity (64) on the movable structure (20) for receiving the latch (63).

10. Cooking apparatus (1) according to one of Claims 3 to 7, **characterized in that** the handle (40) comprises:
- a first member (45) driven by the said control member (61) in translation with respect to the gripping body (41);
- a second member (48), guided in translation with respect to a first portion (42) of the body, and left free to rotate with respect to a second portion (43) of the body, such that the first member (45) is able to rotate the second member (48) about the axis (C), in the second portion (43) of the body,
- the latch (63) is mounted slidably in rotation with respect to the second member (48),
- the said gripping body (41) surrounding the first (45) and second (48) operating members, the said body (41) comprising means (44) for axially retaining the second member (48) in the storage state, and leave it free with respect to the body (41) in the use state.

11. Apparatus (1) according to one of the preceding claims, **characterized in that** it comprises a plate (13) for recovering food which has fallen from the movable structure (20), which plate is adapted to be arranged:
- below the structure (20) in a use state, and
- along it in a storage state in which the said plate (13) is situated at a distance from the lock (60).
